# DEMANDE DE BREVET EUROPEEN

(11) **EP 4 091 849 A1**
(43) Date de publication de la demande: **23.11.2022**
(21) Numéro de dépôt: 22173158.1
(22) Date de dépôt: 13.05.2022
(51) Int. Cl.: B60J 5/04, B62D 25/04, E05B 83/40, B60J 5/06

(54) **CAISSE POUR VÉHICULE UTILITAIRE COMPRENANT UNE PORTE COULISSANTE ÉQUIPÉE D'UN MOYEN DE RÉTENTION**

(30) Priorité: 20.05.2021 FR 2105292
(71) Demandeur: Renault s.a.s, 92100 Boulogne Billancourt (FR)
(72) Inventeur: FERRERO, Johan, 78280 GUYANCOURT (FR); POULLARD, Christophe, 78640 VILLIERS SAINT FREDEDIC (FR)

(57) **Abrégé**

L'invention porte sur une caisse de véhicule, notamment de véhicule automobile, comprenant une porte coulissante (2) comprenant un caisson (3) et une commande d'ouverture intérieure (5), le caisson (3) comprenant un renfort (6) rapporté sur le caisson (3), le renfort (6) comprenant une première partie (10) destinée à renforcer la commande d'ouverture intérieure (5), un pied, notamment un pied milieu, comprenant un premier moyen de retenue, le renfort (6) comprenant une deuxième partie (20) s'étendant depuis la première partie (10) par une zone de liaison (15), la deuxième partie (20) étant destinée à maintenir la porte coulissante (2) en position fermée, ou sensiblement fermée, en cas d'effort et/ou choc sur la porte coulissante (2) depuis l'intérieur du véhicule vers l'extérieur en coopérant avec le premier moyen de retenue du pied.

## Description

### Domaine technique de l'invention

L'invention concerne une caisse pour véhicule comprenant une porte coulissante. L'invention porte encore sur un véhicule comprenant une telle caisse.

### Etat de la technique antérieure

Un véhicule automobile, en particulier utilitaire, requiert un accès conséquent au sein de l'habitacle et/ou de la zone de chargement afin de faciliter le chargement et/ou le déchargement. Un tel véhicule est donc généralement équipé d'au moins une porte latérale coulissante. Une telle porte comprend une commande d'ouverture intérieure permettant de libérer une serrure d'une telle porte depuis l'intérieur du véhicule. Une telle commande d'ouverture intérieure est généralement renforcée au niveau de sa fixation sur la porte.

En outre, un véhicule utilitaire est notamment destiné à transporter des objets lourds, mais peut être décliné en version transport de personnes. Ainsi, une telle porte coulissante doit répondre à des exigences réglementaires. En effet, l'ouverture intempestive en cas de chocs et/ou d'efforts provenant de l'intérieur du véhicule sur la porte doit être évitée, tout du moins limitée. De tels efforts et/ou chocs sur la porte proviennent par exemple d'une ou plusieurs personnes ou d'un ou plusieurs objets qui basculent et/ou roulent et/ou pivotent et/ou tombent et/ou sont projetés. De telles situations se produisent par exemple lors de virage(s) négociés à vitesse trop élevée et/ou d'accélération(s) et/ou de freinage(s) importants, et a fortiori, en cas d'accident. Ainsi, une telle porte coulissante comprend généralement un moyen de rétention de la porte fermée ou sensiblement fermée en cas de chocs et/ou d'efforts sur la porte depuis l'intérieur.

Cependant, dans certaines configurations, le moyen de rétention de la porte se trouve à proximité immédiate de la commande d'ouverture intérieure. Il est alors complexe de renforcer la commande d'ouverture intérieure par manque d'espace disponible à ce niveau.

### Présentation de l'invention

Le but de l'invention est de fournir une caisse remédiant aux inconvénients ci-dessus. En particulier, l'invention propose une solution permettant de simplifier le montage d'un moyen de rétention d'une porte coulissante.

### Résumé de l'invention

Pour atteindre cet objectif, l'invention porte sur une caisse de véhicule, notamment de véhicule automobile, comprenant :
- une porte coulissante comprenant un caisson et une commande d'ouverture intérieure, le caisson comprenant un renfort rapporté sur le caisson, notamment par soudage et/ou brasage et/ou vissage et/ou collage, le renfort comprenant une première partie destinée à renforcer la commande d'ouverture intérieure,
- un pied, notamment un pied milieu, comprenant un premier moyen de retenue,
le renfort comprenant une deuxième partie s'étendant depuis la première partie par une zone de liaison, la deuxième partie étant destinée à maintenir la porte coulissante en position fermée, ou sensiblement fermée, en cas d'effort et/ou choc sur la porte coulissante depuis l'intérieur du véhicule vers l'extérieur en coopérant avec le premier moyen de retenue du pied.

La première partie du renfort peut s'étendre dans un premier plan ou sensiblement dans un premier plan, la deuxième partie du renfort pouvant s'étendre dans un deuxième plan ou sensiblement dans un deuxième plan, le premier plan pouvant être perpendiculaire ou sensiblement perpendiculaire au deuxième plan.

Le renfort peut comprendre une plaque destinée à rigidifier la zone de liaison entre la première partie et la deuxième partie, notamment une plaque en forme de cornière, notamment fixée par soudage et/ou collage sur le renfort.

La deuxième partie du renfort peut comprendre un deuxième moyen de retenue.

Le deuxième moyen de retenue peut être un orifice, notamment un orifice comprenant une encoche.

En cas d'effort et/ou choc sur la porte coulissante depuis l'intérieur vers l'extérieur en position fermée de la porte coulissante, le premier moyen de retenue peut venir se bloquer dans le deuxième moyen de retenue.

Le premier moyen de retenue peut comprendre un doigt s'étendant ou s'étendant sensiblement selon la direction de coulissement de la porte coulissante, notamment un doigt comprenant un épaulement.

Le premier moyen de retenue peut être fixé sur le pied par un moyen de fixation, notamment un moyen de fixation comprenant un système vis/écrou.

La première partie du renfort peut comprendre au moins un bossage ou un embouti et/ou la deuxième partie du renfort peut comprendre au moins un bossage ou un embouti.

L'invention porte encore sur un véhicule, notamment un véhicule automobile, comprenant une caisse telle que définie précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue partielle en perspective d'une porte coulissante d'une caisse selon un mode de réalisation.
[Fig. 3] La figure 3 est une vue partielle en perspective d'un caisson d'une porte coulissante d'une caisse selon le mode de réalisation.
[Fig. 4] La figure 4 est une vue en perspective d'un renfort d'un caisson d'une porte coulissante selon le mode de réalisation.
[Fig. 5] La figure 5 est une vue en perspective d'un premier moyen de retenue d'une caisse selon un mode de réalisation.
[Fig. 6] La figure 6 est une vue en perspective d'un capuchon d'une caisse selon un mode de réalisation.
[Fig. 7] La figure 7 est une vue en perspective du premier moyen de retenue selon le mode de réalisation.
[Fig. 8] La figure 8 est une vue en perspective partielle d'une porte coulissante selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

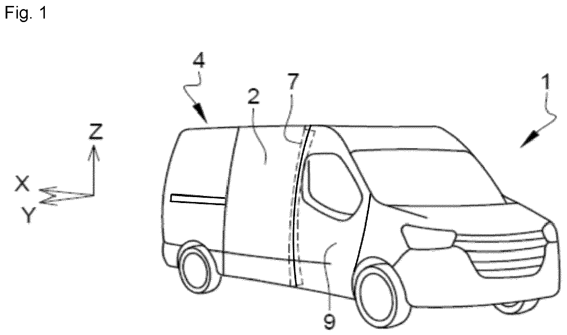

La figure 1 illustre schématiquement un véhicule 1, de préférence un véhicule automobile. Avantageusement, le véhicule automobile est de type utilitaire. Le véhicule comprend au moins une porte 2 d'accès au sein d'un habitacle et/ou d'une zone de chargement. La porte 2 est coulissante. Avantageusement, la porte 2 est une porte latérale coulissante. De préférence, la porte latérale coulissante 2 est une porte arrière. Par porte arrière, on entend une porte agencée derrière une porte avant 9. Par exemple, le véhicule comprend une porte latérale coulissante du côté droit (illustrée sur la figure 1) et une porte latérale coulissante du côté gauche. Eventuellement, le véhicule comprend plusieurs portes latérales coulissantes côté droit et/ou côté gauche, agencées à l'avant et/ou à l'arrière.

Le véhicule 1 comprend une caisse 4.

La caisse 4 comprend au moins une porte coulissante 2 et au moins un pied 7, par exemple du côté droit. Par exemple, comme illustré sur la figure 1, le pied 7 est le pied milieu, c'est-à-dire le pied agencé au niveau de la jonction entre la porte avant 9 droite et la porte arrière 2 droite.

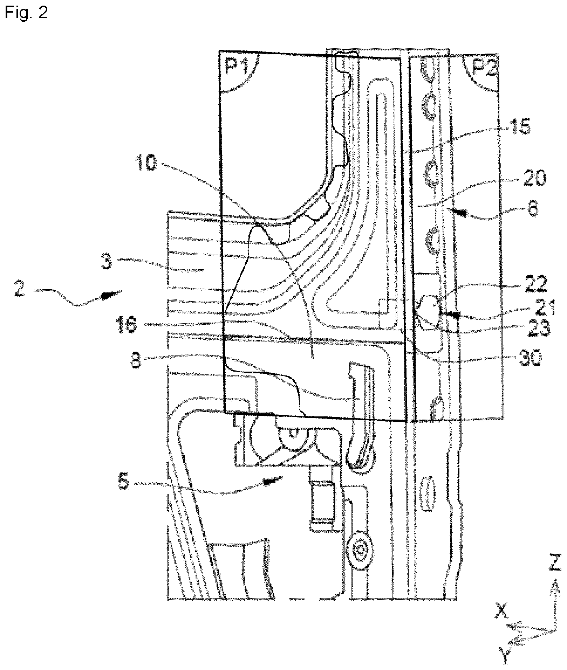

Plus précisément, comme illustré sur la figure 2, la porte coulissante 2 comprend un caisson 3 et une commande d'ouverture intérieure 5. La commande d'ouverture intérieure 5 comprend par exemple une poignée 8 pour l'actionnement d'une serrure de la porte 2.

Le caisson 3 de la porte 2 comprend un renfort 6 rapporté sur le caisson 3. Par exemple, la fixation du renfort 6 sur le caisson 3 est assurée par soudage et/ou brasage et/ou vissage et/ou collage. Le renfort est de préférence une pièce en acier, par exemple emboutie, par exemple d'épaisseur comprise entre 1 mm et 1.5 mm, notamment de l'ordre de 1.2 mm.

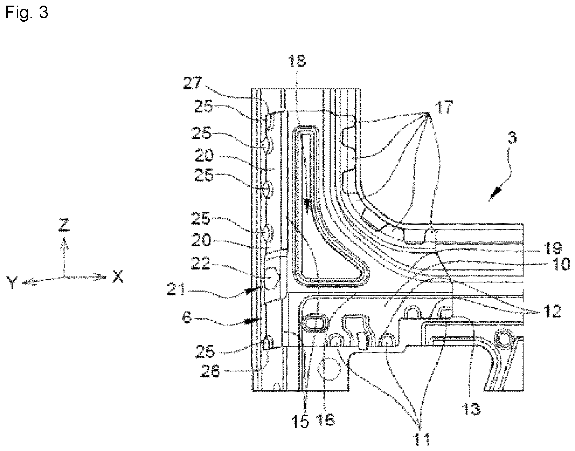

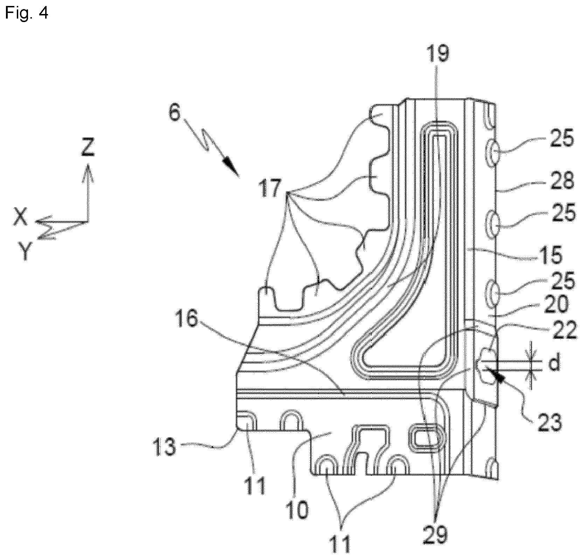

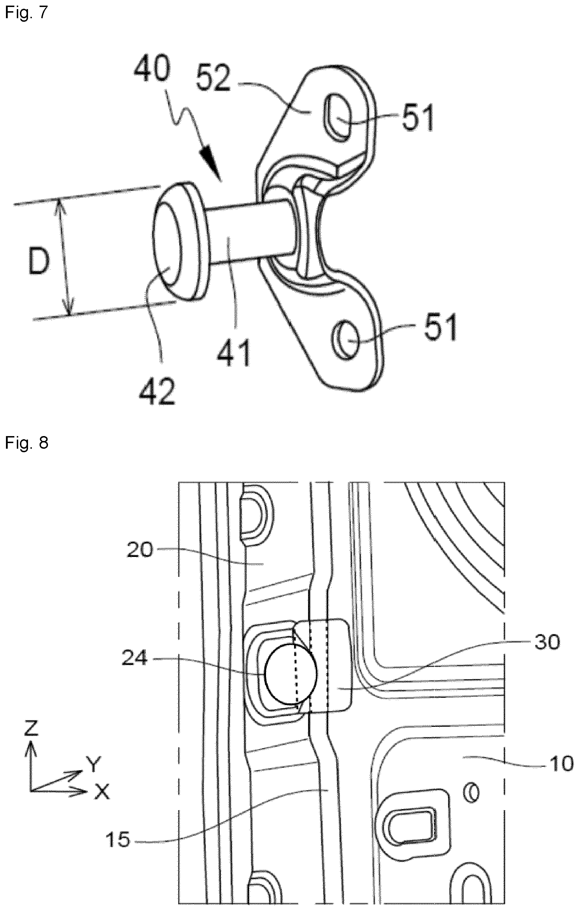

A noter que la figure 2 illustre une porte coulissante partielle côté gauche. A noter que la figure 3 illustre le caisson 3 comprenant le renfort 6 de la porte coulissante 2 côté droit. A noter que la figure 4 illustre le renfort pour un caisson de porte côté gauche. A noter que la figure 8 illustre une porte côté gauche. Pour simplifier, les signes de référence des différents éléments sont les mêmes qu'il s'agisse d'une porte côté droit ou d'une porte côté gauche.

Comme illustré sur les figures 2, 3 et 4, le renfort 6 comprend une première partie 10 destinée à renforcer la commande d'ouverture intérieure 5. La première partie 10 s'étend vers le bas de sorte à permettre de rigidifier la commande d'ouverture intérieure 5. La première partie 10 s'étend dans un premier plan P1, ou sensiblement dans le premier plan P1, illustré sur la figure 2. Le premier plan P1 est vertical et longitudinal ou sensiblement vertical et longitudinal. La première partie 10 comprend de préférence au moins un bossage ou un embouti ou un pli 11. Par exemple, comme illustré sur la figure 3, la première partie 10 comprend trois emboutis 11 au niveau d'une arête inférieure 12. Par exemple, un embouti 11 est réalisé au niveau d'un coin 13 entre l'arête inférieure 12 et une arête arrière s'étendant verticalement ou sensiblement verticalement. De préférence, une nervure ou pli 16 s'étend longitudinalement ou sensiblement longitudinalement au sein de la première partie 10. Ce ou ces plis, bossages et/ou emboutis apportent de la rigidité à la zone de fixation et/ou de maintien de la commande d'ouverture intérieure 5, en particulier dans le plan P1 ou sensiblement dans le plan P1. De préférence, comme illustré notamment sur la figure 3, la première partie 10 a une forme d'équerre s'étendant sensiblement dans le premier plan P1. Par exemple, un trou ou ouverture 18 est ménagé au sein de la première partie 10. Par exemple, l'ouverture 18 a une forme triangulaire ou sensiblement triangulaire et/ou comprend un pli ou nervure le long de son périmètre.

Le renfort 6 comprend une deuxième partie 20. La deuxième partie 20 s'étend dans un deuxième plan P2, ou sensiblement dans le deuxième plan P2, illustré sur la figure 2. Le deuxième plan P2 est vertical et transversal ou sensiblement vertical et transversal. Comme illustré sur les figures 2 et 4, le renfort 6 comprend une zone de liaison 15 entre la première partie 10 et la deuxième partie 20. De préférence, la zone de liaison 15 est un pli de l'ordre de 90 degrés voire davantage. Ainsi, de préférence, le premier plan P1 est perpendiculaire, ou sensiblement perpendiculaire, au deuxième plan P2. La deuxième partie 20 du renfort 6 comprend au moins un bossage ou un embouti 25 illustré sur la figure 3. Par exemple, un embouti est agencé au niveau d'un coin avant inférieur 26 et/ou un autre embouti est agencé au niveau d'un coin avant supérieur 27. De préférence les emboutis 25 sont ménagés au niveau d'une arête avant 28 de la deuxième partie 20 référencée sur la figure 4.

Le renfort 6 comprend de préférence une plaque 30 illustrée sur la figure 8 et sur la figure 2 en pointillés. La plaque 30 est destinée à rigidifier la zone de liaison 15 entre la première partie 10 et la deuxième partie 20 au niveau d'un orifice 22 qui sera détaillé par la suite. Avantageusement, la plaque 30 est en forme de cornière ou est une cornière. Par cornière, on entend de préférence une tôle pliée, ou encore venue de matière par profilage, comprenant deux ailes s'étendant à 90 degrés ou sensiblement à 90 degrés l'une de l'autre. Une telle cornière a une grande rigidité tout en ayant un encombrement réduit. Par exemple, l'épaisseur de la plaque 30 est comprise entre 1 mm et 2 mm, de préférence de l'ordre de 1.5 mm, notamment de 1.4 mm. Avantageusement, la plaque 30 est fixée par soudage et/ou collage sur le renfort 6 et/ou sur le caisson 3. De préférence, des nervures ou plis 29 (figure 4) sont prévues sur la deuxième partie 20 au niveau de la zone de réception de la plaque 30. Ces plis 29 augmentent la rigidité de la deuxième partie à ce niveau et/ou créent un logement destiné à recevoir l'aile de la plaque 30 s'étendant, ou s'étendant sensiblement, dans le deuxième plan P2. L'autre aile de la plaque 30 s'étend, ou s'étend sensiblement, dans le premier plan P1.

Ainsi, le renfort 6 comprend la deuxième partie 20 destinée à maintenir la porte coulissante 2 en position fermée, ou sensiblement fermée, en cas d'effort et/ou choc sur la porte coulissante 2 depuis l'intérieur du véhicule vers l'extérieur. Pour ce faire, la deuxième partie 20, renforcée de préférence par la plaque 30, coopère avec un premier moyen de retenue 40.

Le pied 7 comprend le premier moyen de retenue 40 ménagé de préférence sensiblement au niveau du milieu de la porte selon la direction verticale. Le premier moyen de retenue 40, illustré sur la figure 7, comprend un doigt 41 s'étendant ou s'étendant sensiblement selon la direction de coulissement globale de la porte coulissante 2. Ainsi, pour une porte coulissante latérale, la direction de coulissement est la direction longitudinale. Par doigt 41, on entend de préférence un axe, ou arbre de section cylindrique, ou partie axiale, de préférence en acier. Avantageusement, le doigt 41 comprend un épaulement ou bourrelet 42. L'épaulement 42 a un diamètre extérieur D supérieur au diamètre du doigt 41.

Par exemple, le premier moyen de retenue 40 est fixé sur le pied 7 par un moyen de fixation 50. Le moyen de fixation 50 comprend par exemple une platine 52 supportant le doigt 41. La platine 52 comprend de préférence au moins un trou 51 de passage pour recevoir un système vis/écrou, tel qu'une vis ou un boulon. De préférence, la platine comprend deux trous 51. Par exemple, les trous 51 sont oblongs de sorte à permettre des réglages par rapport au pied 7.

Comme illustré sur la figure 4, la deuxième partie 20 du renfort 6 comprend un deuxième moyen de retenue 21. De préférence encore, le deuxième moyen de retenue 21 comprend un orifice 22. En cas de premier moyen de retenue 40, 41 ménagé sensiblement au niveau du milieu de la porte selon la direction verticale, l'orifice 22 est ménagé en vis-à-vis, au même niveau selon la direction verticale. A noter que l'orifice 22 est à proximité de la commande d'ouverture intérieure 5, positionnée également au milieu, ou sensiblement au milieu, de la porte selon la direction verticale. Par exemple, l'orifice 22 comprend une encoche 23, de préférence circulaire ou sensiblement circulaire, ménagée vers l'intérieur du véhicule. A noter qu'en cas d'apposition de la plaque 30, la plaque 30 comprend un décrochement de sorte à épouser le pourtour de l'orifice 22 et/ou de l'encoche 23. De préférence, le diamètre d de l'encoche 23 (figure 4) circulaire est égal ou tout juste supérieur au diamètre de la partie axiale du doigt 41. Quoi qu'il en soit, le diamètre de l'encoche 23 est inférieur au diamètre extérieur D de l'épaulement 42 illustré sur la figure 7.

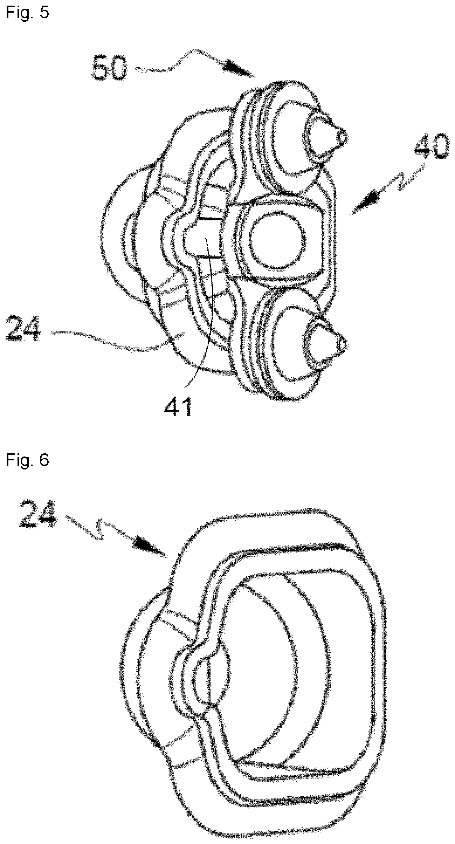

Plus précisément, comme illustré sur la figure 5, en position fermée de la porte coulissante, le doigt 41 est inséré dans l'orifice 22. A noter qu'un jeu est prévu entre le doigt 41 et l'orifice 22 afin d'éviter le contact entre le doigt, en particulier entre l'épaulement 42 du doigt, et l'orifice 22 en début d'ouverture et en fin de fermeture de la porte coulissante.

En cas d'effort et/ou choc sur la porte coulissante 2 depuis l'intérieur vers l'extérieur en position fermée de la porte coulissante, le premier moyen de retenue 40 vient se bloquer dans le deuxième moyen de retenue 21. Plus précisément, la porte latérale 2 est poussée selon la direction transversale vers l'extérieur du véhicule. Ainsi, en cas de déplacement transversal de la porte sous la contrainte due à un effort ou en réponse à un choc, l'orifice 22 est décalé transversalement puisqu'il est ménagé dans la porte. Un tel décalage de l'orifice 22 engendre un contact du doigt 41 contre le pourtour de l'orifice 22 côté intérieur du véhicule, c'est-à-dire contre l'encoche 23.

Autrement dit, l'encoche 23 s'encastre dans le doigt 41. Du fait de la présence de l'épaulement 42, en particulier de son diamètre D supérieur au diamètre de l'encoche 23, l'épaulement se coince dans ou derrière l'encoche 23. Par exemple, la moitié de la section de l'épaulement, ou sensiblement la moitié de la section de l'épaulement 42 se bloque derrière l'orifice 22 et/ou l'encoche 23. Ainsi, la porte ne peut pas se translater davantage selon la direction transversale vers l'extérieur du véhicule. En effet, le premier moyen de retenue (le doigt 41 doté de son épaulement 42 fixé sur le pied 7) reprend les efforts dus aux chocs et/ou à la charge par l'intermédiaire du deuxième moyen de retenue (l'orifice 22 et l'encoche 23 ménagés dans la deuxième partie 20 du renfort 6 fixé au caisson 3 de la porte 2).

Le renfort 6 est particulièrement rigide, notamment grâce à la plaque 30. Ainsi, le renfort ne tourne pas et/ou ne s'ouvre pas sous l'effet de l'effort. Par s'ouvre, on entend que l'angle entre la première partie 10 et la deuxième partie 20 augmente sous l'effet de l'effort.

Cette rigidité du renfort est maximisée par sa forme selon deux plans P1, P2 perpendiculaires ou sensiblement perpendiculaires, ainsi que par ses plis 16, 19, 29 et/ou nervures et/ou emboutis 11, 25. En outre, le renfort 6 est fixé sur le caisson via divers points sur la première partie 10 et via divers points sur la deuxième partie 20. Pour rappel, le renfort est de préférence soudé sur le caisson sur les deux plans ce qui facilite l'assemblage et augmente la raideur. La forme en L du renfort permet d'assurer la fonction de rétention de la porte tout en renforçant la zone de maintien de la commande d'ouverture intérieure. De manière générale, les efforts de maintien de la commande d'ouverture intérieure sont repris par la première partie 10 s'étendant suivant le premier plan P1 alors que les efforts de la fonction rétention sont repris par la deuxième partie 20 s'étendant suivant le deuxième plan P2. Avantageusement, le renfort comprend des languettes 17 (figures 3 et 4) au niveau de la première partie 10 facilitant la fixation sur le caisson. Les languettes 17 s'étendent depuis un pli 19 ou sensiblement depuis un pli 19 ménagé sur la première partie 10. De préférence le pli 19 présente une courbe ou sensiblement une courbe dans le plan P1. De préférence, les languettes 17 s'étendent dans un plan parallèle au premier plan P1.

Du côté du doigt 41, la rigidité est optimale du fait de sa fixation sur le pied 7, de préférence le pied milieu qui est une partie de la caisse particulièrement rigide.

Avantageusement, comme illustré sur les figures 5, 6 et 8, un capuchon 24 vient épouser le pourtour de l'orifice 22 et, de préférence, l'intérieur du caisson 3 au niveau de l'orifice 22. En cas de présence de l'encoche 23 dans l'orifice 22, le capuchon 24 vient épouser le rebord de cette encoche. A noter que ce capuchon est de préférence en caoutchouc ou plastique mou ou obtenu dans un matériau ayant des propriétés similaires. La fonction du capuchon 24 est d'habiller, d'embellir, l'orifice 22 et la cavité créée par l'orifice 22 dans le caisson. En cas d'apposition de la plaque 30 illustrée sur la figure 8, le capuchon cache l'épaisseur de la plaque, en particulier au niveau de l'encoche 23. A noter que le capuchon n'entrave ni le contact, ni la coopération du doigt 41 avec l'encoche 23 lors d'un choc et/ou effort contre la porte, le capuchon étant dans ce cas écrasé et/ou déchiré et/ou coupé au niveau du contact doigt/encoche lors de leur rapprochement.

En résumé, le renfort 6 renforce à la fois la zone de maintien et/ou fixation de la commande d'ouverture intérieure 5 tout en renforçant la zone de rétention destinée à coopérer avec le doigt de retenue 41 ménagé en saillie du pied 7. Ainsi, le renfort 6 unique assure deux fonctions distinctes. Le renfort 6 a une masse faible, notamment grâce à l'ouverture 18 dans la première partie 10.

La solution permet de satisfaire les exigences réglementaires en termes de rétention de porte coulissante, notamment en cas d'accident. En effet, la porte ne s'échappe pas ou peu en cas de choc ou efforts provenant de l'intérieur du véhicule.

La solution permet d'économiser la conception, la fabrication, la masse et le montage d'une pièce, le renfort 6 assurant à la fois la fonction renfort de la commande d'ouverture intérieure et la fonction rétention de la porte. Il en résulte une économie et un gain de temps qui se répercute sur le prix de revient de fabrication du véhicule.

En outre, la solution est particulièrement adaptée lorsque la commande d'ouverture intérieure est à proximité immédiate du moyen de rétention supporté par la porte coulissante.

Grâce à la solution, en cas de transport de personnes ou de marchandises ou d'objets lourds, toute ouverture intempestive en cas de chocs et/ou d'efforts provenant de l'intérieur du véhicule sur la porte est évitée, tout du moins très limitée. En effet, en cas de personnes ou d'objets, qui basculent et/ou roulent et/ou pivotent et/ou tombent et/ou sont projetés, la porte demeure fermée ou sensiblement fermée. Ceci est assuré par la coopération du doigt 41 avec l'orifice 22, plus précisément de l'épaulement 42 qui se bloque derrière l'encoche 23. Ainsi, lors de virage(s) négociés à vitesse trop élevée et/ou d'accélération(s) et/ou de freinage(s) importants, et a fortiori, en cas d'accident, la porte reste fermée ou sensiblement fermée ce qui évite l'éjection des occupants ou une perte de marchandise pouvant entraîner un accident pour d'autres véhicules.

En remarque, la solution atteint donc l'objectif recherché de fournir une caisse permettant de renforcer une commande d'ouverture intérieure agencée à proximité d'un moyen de rétention, tout en facilitant le montage du renfort, et présente les avantages suivants :
- elle est économique,
- elle peut être utilisée sur tous types de véhicules disposant d'une porte coulissante, en particulier les véhicules utilitaires.

Alternativement, le pied comprend un deuxième moyen de retenue de type orifice alors que la porte comprend un premier moyen de retenue de type doigt (non illustré). Le premier moyen de retenue est alors fixé sur un tel renfort s'étendant dans deux plans.

Evidemment, en cas de véhicule équipé de deux portes coulissantes (une à droite et une à gauche), la caisse comprend les deux portes, les pieds droit et gauche ainsi que les renforts droit et gauche. Davantage de portes, de pieds et de renforts sont également envisageables.

En outre, en cas de porte coulissante non latérale, par exemple coulissant transversalement au niveau d'une ouverture de coffre, un pied arrière est par exemple équipé d'un premier moyen de retenue et la porte coulissante non latérale comprend un tel renfort recevant le deuxième moyen de retenue.

## Revendications

1. Caisse (4) de véhicule, notamment de véhicule automobile (1), **caractérisée en ce qu'**elle comprend :
- une porte coulissante (2) comprenant un caisson (3) et une commande d'ouverture intérieure (5), le caisson (3) comprenant un renfort (6) rapporté sur le caisson (3), notamment par soudage et/ou brasage et/ou vissage et/ou collage, le renfort (6) comprenant une première partie (10) destinée à renforcer la commande d'ouverture intérieure (5),
- un pied (7), notamment un pied milieu, comprenant un premier moyen de retenue (40),
et **en ce que** le renfort (6) comprend une deuxième partie (20) s'étendant depuis la première partie (10) par une zone de liaison (15), la deuxième partie (20) étant destinée à maintenir la porte coulissante (2) en position fermée, ou sensiblement fermée, en cas d'effort et/ou choc sur la porte coulissante (2) depuis l'intérieur du véhicule vers l'extérieur en coopérant avec le premier moyen de retenue (40) du pied (7).

2. Caisse (4) selon la revendication précédente, **caractérisée en ce que** la première partie (10) du renfort (6) s'étend dans un premier plan (P1) ou sensiblement dans un premier plan (P1), la deuxième partie (20) du renfort (6) s'étendant dans un deuxième plan (P2) ou sensiblement dans un deuxième plan (P2), le premier plan (P1) étant perpendiculaire ou sensiblement perpendiculaire au deuxième plan (P2).

3. Caisse (4) selon l'une des revendications précédentes, **caractérisée en ce que** le renfort (6) comprend une plaque (30) destinée à rigidifier la zone de liaison (15) entre la première partie (10) et la deuxième partie (20), notamment une plaque (30) en forme de cornière, notamment fixée par soudage et/ou collage sur le renfort (6).

4. Caisse (4) selon l'une des revendications précédentes, **caractérisée en ce que** la deuxième partie (20) du renfort (6) comprend un deuxième moyen de retenue (21).

5. Caisse (4) selon la revendication précédente, **caractérisée en ce que** le deuxième moyen de retenue (21) est un orifice (22), notamment un orifice (22) comprenant une encoche (23).

6. Caisse (4) selon l'une des revendications 4 ou 5, **caractérisée en ce qu'**en cas d'effort et/ou choc sur la porte coulissante (2) depuis l'intérieur vers l'extérieur en position fermée de la porte coulissante, le premier moyen de retenue (40) vient se bloquer dans le deuxième moyen de retenue (21).

7. Caisse (4) selon l'une des revendications précédentes, **caractérisée en ce que** le premier moyen de retenue (40) comprend un doigt (41) s'étendant ou s'étendant sensiblement selon la direction de coulissement de la porte coulissante (2), notamment un doigt (41) comprenant un épaulement (42).

8. Caisse (4) selon l'une des revendications précédentes, **caractérisée en ce que** le premier moyen de retenue (40) est fixé sur le pied (7) par un moyen de fixation (50), notamment un moyen de fixation (50) comprenant un système vis/écrou.

9. Caisse (4) selon l'une des revendications précédentes, **caractérisée en ce que** la première partie (10) du renfort (6) comprend au moins un bossage ou un embouti (11) et/ou **en ce que** la deuxième partie (20) du renfort (6) comprend au moins un bossage ou un embouti (25).

10. Véhicule, notamment véhicule automobile (1), **caractérisé en ce qu'**il comprend une caisse (4) selon l'une des revendications précédentes.
